(19) Europäisches Patentamt
European Patent Office
Office européen des brevets

(11) EP 0 592 635 B1

(12) **EUROPÄISCHE PATENTSCHRIFT**

(45) Veröffentlichungstag und Bekanntmachung des Hinweises auf die Patenterteilung:
**14.10.1998 Patentblatt 1998/42**

(21) Anmeldenummer: **93908923.1**

(22) Anmeldetag: **06.04.1993**

(51) Int Cl.[6]: **C09K 19/02**, C09K 19/58, G02F 1/137

(86) Internationale Anmeldenummer:
**PCT/EP93/00857**

(87) Internationale Veröffentlichungsnummer:
**WO 93/21281 (28.10.1993 Gazette 1993/26)**

(54) **TN-ZELLE MIT VERBESSERTER GRAUSTUFENDARSTELLUNG**

TN CELL WITH IMPROVED GREY-SHADE REPRESENTATION

CELLULE A CRISTAL LIQUIDE NEMATIQUE AVEC REPRESENTATION AMELIOREE DE L'ECHELLE DES GRIS

(84) Benannte Vertragsstaaten:
**DE ES FR GB IT NL**

(30) Priorität: **16.04.1992 DE 4212744**

(43) Veröffentlichungstag der Anmeldung:
**20.04.1994 Patentblatt 1994/16**

(73) Patentinhaber: **MERCK PATENT GmbH**
**64271 Darmstadt (DE)**

(72) Erfinder:
- **PLACH, Herbert**
  **D-6100 Darmstadt (DE)**
- **BREDDELS, Paulus, Adrianus**
  **Hannam-dong 737-64**
  **Seoul (KR)**

(56) Entgegenhaltungen:
**EP-A- 0 273 443** **DE-A- 2 827 471**
**DE-A- 3 137 058** **DE-A- 4 007 039**
**FR-A- 2 356 173**

- **DATABASE WPIL Derwent Publications Ltd., London, GB; AN 83-03650K & JP,A,57 195 221 (OPTOREX) 30 November 1982**
- **MOLECULAR CRYSTALS AND LIQUID CRYSTALS BULLETIN Bd. 144, 1987, READING GB Seiten 127-136 S.KUMAR 'Effect of chiral dopant concentration on the time response of a twisted nematic cell'**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 592 635 B1

Printed by Jouve, 75001 PARIS (FR)

## Beschreibung

Die Erfindung betrifft eine TN-Zelle, welche zwischen 2 mit Elektroden- und Ausrichtungsschichten versehenen Substraten einen nematischen Flüssigkristall mit positiver dielektrischer Anisotropie und einem Twistwinkel von im wesentlichen 90° enthält, wobei das Produkt aus dem Abstand der Substratplatten d und der optischen Anisotropie $\Delta n$ des Flüssigkristalls zwischen 0,15 und 0,70 µm beträgt.

Derartige Zellen, die von DE 30 22 818 umfaßt sind, sind durch eine günstige Blickwinkelabhängigkeit des Kontrastes gekennzeichnet und haben sich insbesondere bei mit einer aktiven Matrix angesteuerten Displays mit hohem Informationsgehalt ganz allgemein durchgesetzt.

Nachteilig bei derartigen Zellen ist jedoch, daß bei der Darstellung von Graustufen ein Effekt beobachtet wird, den man als inversen Kontrast bezeichnet, was bedeutet, daß der Kontrast nach anfänglicher Zunahme bei höherer angelegter Spannung zunächst wieder abnimmt. In Fig. 1 sind elektrooptische Kennlinien bei verschiedenen Blickwinkeln $\theta$ für eine TN-Zelle gezeigt, die einen Twistwinkel von 90° und einen Zellabstand von d = 5,94 µm aufweist und folgende Flüssigkristallmischung LCI enthält

| | |
|---|---|
| 5,0 % | 4-(trans-4-Pentylcyclohexyl)-1-fluorobenzol |
| 5,0 % | 4-(trans-4-Heptylcyclohexyl)-1-fluorobenzol |
| 8,0 % | 4-[trans-4-(trans-4-Ethylcyclohexyl)-cyclohexyl]-1-trifluoromethoxybenzol |
| 9,0 % | 4-[trans-4-(trans-4-Propylcyclohexyl)-cyclohexyl]-1-trifluoromethoxybenzol |
| 9,0 % | 4-[trans-4-(trans-4-Pentylcyclohexyl)-cyclohexyl]-1-trifluoromethoxybenzol |
| 11,0 % | 1-[trans-4-(trans-4-Propylcyclohexyl)-cyclohexyl]-2-(3,4-difluorophenyl)-ethan |
| 11,0 % | 1-[trans-4-(trans-4-Pentylcyclohexyl)-cyclohexyl]-2-(3,4-difluorophenyl)-ethan |
| 5,0 % | 2,6-Difluor-4-(trans-4-propylcyclohexyl)-3',4'-difluorobiphenyl |
| 4,0 % | 2, 6-Difluor-4- (trans-4-pentylcyclohexyl)-3',4'-difluorobiphenyl |
| 8,0 % | 4-[trans-4-(trans-4-propylcyclohexyl)-cyclohexyl]-2,6-difluoro-1-difluoromethoxybenzol |
| 14,0 % | 4-[trans-4-(trans-4-pentylcyclohexyl)-cyclohexyl]-2,6-difluoro-1-difluoromethoxybenzol |
| 6,0 % | 4-Trifluoromethoxyphenyl trans-4-(trans-4-propylcyclohexyl)-cyclohexylcarboxylat |
| 6, 0 % | 4-Trifluoromethoxyphenyl trans-4-(trans-4-pentylcyclohexyl)-cyclohexylcarboxylat |

Die Flüssigkristallmischung LC I weist folgende Eigenschaften auf:

| | |
|---|---|
| Klärpunkt | N 103 °C I |
| Viskosität | $\eta$ (20 °C) = 21 $mm^2s^{-1}$ |
| dielektrische Anisotropie | $\Delta\varepsilon$ (20 °C, 1kHz) = 6,9 |
| optische Anisotropie | $\Delta n$ (20 °C, 589 nm) = 0,0848 |

Die optische Weglängendifferenz der Zelle beträgt $d \cdot \Delta n$ = 0,50 µm; die Zelle enthält auf beiden Seiten je einen Linear-polarisator, deren Absorptionsachsen um 90° gegeneinander gedreht sind, wobei der vordere Polarisator und die Vorzugsrichtung der Moleküle an den Substraten einen Winkel von 90° bilden; man erhält analoge Ergebnisse, wenn die Polarisatoren parallel zur Vorzugsrichtung der Moleküle angeordnet sind. Bei um 90° gegeneinander gedrehten Polarisatoren wird die Zelle bei Ansteuerung dunkel (sog. positive contrast mode). Zellen mit parallel angeordneten Polarisatoren sind dagegen im nicht angesteuerten Zustand dunkel und sie werden bei Ansteuerung hell (sog. negative contrast mode).

Die Definition des Blickwinkels $\theta$ ist in Fig. 2 gezeigt. Sieht man das Display schräg von oben an, ist $\theta < 0$, und entsprechend gilt bei Betrachtung von schräg unten $\theta > 0$. Zur Charakterisierung der Blickwinkelabhängigkeit benötigt man noch einen zweiten Winkel $\Phi$, der in der zu $\theta = 0°$ senkrechten Ebene liegt und von 0-360° variiert; $\Phi$ soll im folgenden als Beobachtungswinkel bezeichnet werden.

In Fig. 1 ist für die angegebene Zelle der relative Kontrast als Funktion der angelegten Spannung für verschiedene Blickwinkel $\theta$ gezeigt. Ein relativer Kontrast von 100 % wird erhalten, wenn in der optischen Meßvorrichtung die Transmission bei ein- und ausgeschalteter Lampe (Halogenlampe) ohne Flüssigkristallzelle gemessen wird. Zur Beschreibung der Lage der elektrooptischen Kennlinie bezüglich der Spannungsachse werden Spannungswerte $V_{x,y,z}$ benutzt, bei denen ein Kontrast von x % bei einem Blickwinkel $\theta$ von y° und einer Temperatur von z °C beobachtet wird. $V_{10,0,20}$ wird vielfach auch als Schwellenspannung und $V_{90,0,20}$ als Sättigungsspannung bezeichnet.

Man entnimmt Fig. 1, daß sich die Form und die Lage der elektrooptischen Kennlinie bezüglich der Spannungsachse bei Variation des Blickwinkel $\theta$ ändern. Ordnet man das Display z.B. so an, daß sich der beste Kontrast bei einer

Beobachtung von schräg unten, z.B. für $\theta \approx 10°$, ergibt und variiert dann bei festgehaltener Spannung, z.B. bei $V_{90,0,20}$, den Blickwinkel θ, beobachtet man für θ < 0, d.h. bei Betrachtung von schräg oben, eine Abnahme des relativen Kontrastes C, d.h. das Display wird heller. Für θ > 0, d.h. bei Betrachtung von schräg unten, wird zunächst eine Erhöhung des Kontrastes C erhalten, d.h. der durch $V_{90,0,20}$ definierte Grauton wird dunkler. Bei weiterer Vergrößerung des Blickwinkels wird der Grauton wieder heller und der Kontrast C sinkt unter den bei kleinen Blickwinkeln θ beobachteten Kontrast. Dieses Phänomen, das man als inversen Kontrast bezeichnet, erweist sich bei der Betrachtung eines Displays als sehr störend. Bei einem Schwarz-Weiß-Display werden bei einer Betrachtung von schräg unten (θ > 0°) mit zunehmendem Blickwinkel (typischerweise ab etwa θ ~ 30°) Bereiche im Display, die für kleinere positive θ dunkelgrau sind, schwarz, während Bereiche, die für kleinere positive θ schwarz sind, bei großen positiven θ dunkelgrau erscheinen. Bei farbigen Displays wirkt sich der Effekt so aus, daß die Farben zum Teil vertauscht werden. Als anschauliches Maß für die Stärke des inversen Kontrastes kann das Ausmaß der Vertiefung in der elektrooptischen Kennlinie bei großen positiven Blickwinkeln θ (z.B. θ = 45°) nach erstmaligem Erreichen des maximalen Kontrasts (in Fig. 1 etwa der Bereich der elektrooptischen Kennlinie zwischen 1,8 und 2,7 V für θ = 45°) dienen.

Zur Darstellung von Graustufen wird die Zelle im Bereich der ansteigenden Kennlinie angesteuert, und die z.B. bei $V_{50,0,20}$, $V_{60,0,20}$, $V_{90,0,20}$ ect. beobachteten relativen Kontrastwerte C entsprechen unterschiedlichen Graustufen. Zur Verdeutlichung des Phänomens des inversen Kontrastes ist in Fig. 3 das aus den bei 2 verschiedenen Spannungen $V_{90,10,20} \pm 100$ mV gemessenen Kontrastwerten C in einem Isokontrastdiagramm als Funktion des Blickwinkels θ und des Beobachtungswinkels Φ gezeigt. Ist der Quotient $a = C(V_{90,10,RT} + 100\ mV)/C(V_{90,10,RT} - 100\ mV) > 1$, beobachtet man bei Erhöhung der Spannung eine Zunahme des Kontrastes, Grautöne werden entsprechend dunkler (normaler Kontrast). Ist dieser Quotient dagegen kleiner als 1, nimmt der Kontrast mit zunehmender Spannung ab und die Grautöne werden heller (inverser Kontrast). In Fig. 3 sind die Bereiche mit $0,9 < a \leq 1$ hellgrau, mit $0,8 < a \leq 0,9$ dunkelgrau und mit $a \leq 0,8$ schwarz markiert. Man erkennt, daß sich für eine herkömmliche TN-Zelle ein großer Bereich mit inversem Kontrast ergibt, wenn man die Zelle von schräg unten betrachtet.

Der Erfindung lag die Aufgabe zugrunde, TN-Zellen bereit zu stellen, bei denen das Phänomen des inversen Kontrastes weniger ausgeprägt ist als bei herkömmlichen Zellen. Weitere Aufgaben der vorliegenden Erfindung ergeben sich für den Fachmann ohne weiteres aus der nachfolgenden detaillierten Beschreibung.

Es wurde gefunden, daß diese Aufgaben durch die Bereitstellung der erfindungsgemäßen TN-Zellen gelöst werden können.

Gegenstand der Erfindung ist somit eine TN-Zelle, welche zwischen zwei mit Elektroden- und Ausrichtungsschichten versehenen Substraten einen nematischen Flüssigkristall mit positiver dielektrischer Anisotropie und einem Twistwinkel von im wesentlichen 90° enthält, wobei das Produkt aus dem Abstand der Substratplatten d und der optischen Anisotropie des Flüssigkristalls zwischen 0,15 und 0,70 μm beträgt, dadurch gekennzeichnet, daß der Flüssigkristall zur Verbesserung der Graustufenkapazität eine Dotierkomponente enthält, so daß die Zelle für den Quotienten aus dem Abstand der Substratplatten d und der ungestörten Pitchlänge des Flüssigkristalls p einen Wert aufweist zwischen $0,1 \leq d/p \leq 0,5$.

Der Aufbau der erfindungsgemäßen TN-Zellen entspricht dem herkömmlicher TN-Zellen. Die Flüssigkristallschicht befindet sich zwischen 2 Substraten oder Trägerplatten, welche mit einer Umrandung eine Zelle bilden.

Auf den Innenseiten der Substrate befinden sich Elektrodenschichten, welchen z.B. aus dünnen, ebenen und transparenten Indium-Zinnoxid- (ITO) oder Indiumoxidschichten ($In_2O_3$) bestehen. Handelt es sich um ein farbwiedergabetaugliches System, weist mindestens eines der beiden Substrate eine weitere Schicht auf, die die organischen Farbmaterialien enthält, oder die Zelle wird mit farbigem Licht beleuchtet.

Auf den Zelleninnenseiten befinden sich Orientierungsschichten, welche direkt mit dem Flüssigkristall in Kontakt stehen und eine im wesentlichen planare Randorientierung der Flüssigkristallmoleküle bewirken. Dabei weisen die Flüssigkristallmoleküle einen gewissen Anstellwinkel oder Pretilt α auf, der i.a. $0° \leq \alpha \leq 10°$ beträgt (low-tilt alignment). Zur Erzeugung einer planaren Orientierungsschicht mit kleinerem Pretilt werden üblicherweise Polymerschichten, z. B. Polyimid- oder Polyvinylalkoholschichten, verwendet, denen durch Reiben, ggf. bei gleichzeitiger Druckanwendung, eine Vorzugsorientierung gegeben wird.

Zwischen den Elektroden- und Orientierungsschichten können weitere Schichten wie z.B. Ausgleichs- und Isolierschichten angeordnet sein.

Die durch die Orientierungsschichten erzwungenen Vorzugsrichtungen der nematischen Direktoren in der Ebene der vorderen und hinteren Substratplatten sind i.a. im wesentlichen um 90° gegeneinander verdreht, wodurch eine verdrillte Struktur der Flüssigkristallschicht resultiert. Der Ausdruck im wesentlichen 90° ist hier weit zu verstehen und umfaßt TN-Zellen mit einem Twistwinkel $\beta = 90° \pm 30$ und insbesondere $\beta = 90° \pm 15$.

Der Flüssigkristallmischung ist häufig eine Dotierkomponente, welche aus einem oder mehreren optisch aktiven Dotierstoffen besteht, zugesetzt, um die Ausbildung von reverse-twist-Bereichen zu vermeiden, wie dies in E. P. Raynes, Electron. Lett., 10 (1974) 141 beschrieben ist. Allerdings wird dabei die Konzentration und die HTP der Dotierkomponente, die für einen Dotierstoff definiert ist, als

$$HTP = \frac{1}{p \cdot c}$$

wobei p die ungestörte Pitchlänge in µm und c die Konzentration des Dotierstoffes in % ist, so gewählt, daß der Quotient aus Zelldicke und Pitchlänge der verwendeten Flüssigkristallmischung klein ist; typischerweise wird d/p < 0,1 und insbesondere d/p < 0,05 gewählt.

In umfangreichen experimentellen Untersuchungen wurde nun gefunden, daß TN-Zellen mit geringer Blickwinkelabhängigkeit des Kontrastes und verbesserter Graustufendarstellung erhalten werden,

* wenn die Flüssigkristallmischung so gewählt wird, daß $0{,}15\ \mu m \le d \cdot \Delta n \le 0{,}70\ \mu m$, und
* wenn der Flüssigkristallmischung eine aus einem oder mehreren Dotiertstoffen bestehende Dotierkomponente zugesetzt wird, die eine solche Konzentration und HTP aufweist, daß die TN-Zelle einen ungestörten d/p-Wert $0{,}1 \le d/p \le 0{,}5$ aufweist.

Bei den im folgenden und im vorstehenden gegebenen d/p-Werten handelt es sich um ungestörte d/p-Werte, wie sie sich etwa in einer Keilzelle ohne Oberflächenorientierung einstellen.

Bei einer TN-Zelle mit einem Twistwinkel von z.B. 90° werden bei einer ungestörten Dotierung mit $0 \le d/p \le 0{,}5$ durch die Orientierungsschichten um 90° gegeneinander verdrehte Vorzugsrichtungen der nematischen Direktoren in der Ebene der vorderen und hinteren Substratplatte erzwungen, so daß der tatsächliche oder gestörte d/p-Wert der TN-Zelle immer d/p = 0,25 beträgt. Wird die Dotierung so hoch gewählt, daß der ungestörte d/p-Wert größer als 0,5 ist, würden sich in der ZN-Zelle mit diesen Randbedingungen ein Twistwinkel von 270° einstellen, d.h. es würde eine STN-Zelle mit einem gestörten d/p-Wert von 0,75 resultieren.

Bei den im folgenden und im vorstehenden gegebenen d/p-Werten handelt es sich dagegen um ungestörte oder rechnerische d/p-Werte, die bei Nichtberücksichtigung der Randbedingungen erhalten werden.

In den Fig. 4 und 5 sind elektrooptische Kennlinien für eine TN-Zelle gezeigt, welche der bei Fig. 1 beschriebenen TN-Zelle weitgehend entspricht mit dem Unterschied, daß die in der TN-Zelle aus Fig. 1 enthaltene Flüssigkristallmischung undotiert ist (d/p = 0), während der Flüssigkristallmischung der TN-Zellen aus Fig. 4 und 5 der Dotierstoff S-811 (Handelsprodukt von E. Merck, Darmstadt)

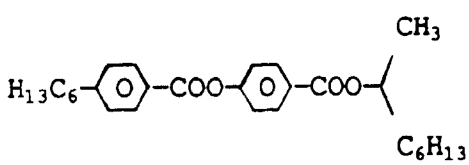

in folgenden Konzentrationen zugesetzt ist:

| TN-Zelle aus | C(S-811) [%] | d/p [1] |
|---|---|---|
| Fig. 4 | 0,28 | 0,20 |
| Fig. 5 | 0,58 | 0,40 |

In den TN-Zellen aus den Fig. 1, 4 und 5 wird jeweils die oben angegebene Flüssigkristallmischung LC I verwendet.

Ein Vergleich von Fig. 1 mit den Fig. 4 und 5 zeigt, daß der Effekt des inversen Kontrastes mit steigendem d/p deutlich verringert wird. Man erkennt, daß die Tiefe des Minimums in der elektrooptischen Kennlinie nach Passieren des ersten Kontrastmaximums, welche ja ein anschauliches Maß für die Stärke des inversen Kontrastes ist, bei den erfindungsgemäßen TN-Zellen mit d/p = 0,2 und insbesondere mit d/p = 0,4 deutlich weniger ausgeprägt ist, als bei der konventionellen TN-Zelle mit d/p = 0.

In den Fig. 6 und 7a sind die Fig. 3 entsprechenden Isokontrastdiagramme für die bei Fig. 4 und 5 beschriebenen TN-Zellen gezeigt; aufgetragen ist jeweils der Quotient a aus den Kontrastwerten bei $V_{90,10,20} \pm 100$ mV (Fig. 6, d/p = 0,20) bzw. $V_{90,10,20} \pm 100$ mV (Fig. 7a, d/p = 0,40). Man erkennt, daß die Bereiche, in denen eine Invertierung des Kontrastes bei Spannungsänderung beobachtet wird ($0{,}9 < a \le 1$ hellgrau markiert, $0{,}8 < a \le 0{,}9$ dunkelgrau markiert und $a \le 0{,}8$ schwarz markiert) deutlich kleiner werden.

In Fig. 7b ist ein Isokontrastdiagramm für die bei Fig. 5 beschriebene TN-Zelle (LC I, d/p = 0,40) gezeigt, wobei

der Quotient a aus den Kontrastwerten bei $V_{90,10,20}$ ± 117 mV aufgetragen ist. Bei dem dotierten System aus Fig. 5 wird durch den Spannungshub von ± 117 mV um $V_{90,10,20}$ die gleiche relative (visuelle) Kontraständerung erzielt wie bei einem Spannungshub von $V_{90,10,20}$ ± 100 mV für das undotierte Sytem aus Fig. 1 ($[\frac{V_{90}}{V_{10}}(d/p = 0) / \frac{V_{90}}{V_{10}}(d/p = 0{,}4)] \times 100$ mV = 117 mV); der höhere Spannungshub ist bei dem dotierten System wegen der geringeren Steilheit der elektrooptischen Kennlinie im oberen Bereich ihres Anstiegs erforderlich.

Ein Vergleich von Fig. 3 und Fig. 7b zeigt, daß die erfindungsgemäßen TN-Zellen im Vergleich zu herkömmlichen TN-Zellen auch dann deutlich kleinere Winkelbereiche mit inversem Kontrast aufweisen, wenn die Zellen unter Bedingungen betrieben werden, die den gleichen visuellen Kontrast ergeben.

In Fig. 10a sind elektrooptische Kennlinien bei verschiedenen Blickwinkeln θ für eine herkömmliche, undotierte TN-Zelle (d/p = 0) gezeigt, die einen Twistwinkel von 90°, ein Zellabstand von d = 4,72 µm aufweist und die Flüssigkristallmischung LC I enthält, so daß d·Δn = 0,4 µm beträgt. Fig. 10b zeigt ein Isokontrastdiagramm für diese Zelle, in der der Quotient a aus den Kontrastwerten bei $V_{90,10,20}$ ± 100 mV aufgetragen ist.

Fig. 11a zeigt elektrooptische Kennlinien bei verschiedenen Blickwinkeln θ für eine erfindungsgemäße TN-Zelle mit d/p = 0,49 (Twistwinkel 90°; d = 4,72 µm; Flüssigkristallmischung LC I, der 0,86 % des Dotierstoffes S-811 zugesetzt sind), und Fig. llb zeigt ein Isokontrastdiagramm für diese Zelle, in der der Quotient a aus den Kontrastwerten bei $V_{90,10,20}$ ± 100 mV aufgetragen ist.

Ein Vergleich der Fig. 10a und 11a bzw. 10b und 11b zeigt die deutliche Verringerung des inversen Kontrastes und die Erhöhung der Graustufenkapazität bei der erfindungsgemäßen TN-Zelle.

Der ungestörte d/p-Wert kann bei den erfindungsgemäßen Zellen allerdings nicht beliebig hoch gewählt werden. Sind die durch die Orientierungsschichten erzwungenen Vorzugsrichtungen des nematischen Direktors an den beiden Substraten im wesentlichen senkrecht zueinander, darf der ungestörte d/p-Wert nicht größer als 0,5 gewählt werden, da sich sonst ein Twistwinkel von β = 270° einstellen würde.

Andererseits sollte der ungestörte d/p-Wert nicht kleiner als 0,10, insbesondere nicht kleiner als 0,15 und ganz besonders nicht kleiner als 0,20 gewählt werden, um eine ausreichende Verringerung des inversen Kontrastes zu erhalten.

Die Wahl des d/p-Arbeitspunktes im Intervall $0{,}10 \leq d/p \leq 0{,}50$ bzw. in den bevorzugten Intervallen 0,15 bzw. $0{,}20 \leq d/p \leq 0{,}50$ wird noch durch die beiden folgenden Effekte beeinflußt:

① Ein Vergleich der Fig. 1, 4 und 5 zeigt, daß die elektrooptischen Kennlinien zu höheren Spannungen verschoben werden. Dies wird besonders deutlich aus der folgenden Tabelle, in welcher die Spannungen $V_{10,10,20}$, $V_{50,10,20}$ und $V_{90,10,20}$ für TN-Zellen aufgeführt sind, welche der bei Fig. 1 beschriebenen TN-Zelle entsprechen, wobei allerdings der d/p-Wert zwischen 0 und 0,5 variiert wurde.

Tabelle

| d/p | $V_{10,10,20}$ [V] | $V_{50,10,20}$ [V] | $V_{90,10,20}$ [V] |
|---|---|---|---|
| 0,10 | 1,88 | 2,28 | 2,82 |
| 0,10 | 1,94 | 2,39 | 3,09 |
| 0,20 | 2,05 | 2,53 | 3,31 |
| 0,30 | 2,15 | 2,65 | 3,56 |
| 0,40 | 2,25 | 2,77 | 3,77 |
| 0,50 | 2,32 | 2,87 | 4,00 |

Mit zunehmendem d/p-Wert werden alle charakteristischen Spannungen, so z.B. auch die Schwellenspannung $V_{10,10,20}$ größer, was nachteilig ist, da höhere Schwellenspannungen in der Regel kompliziertere und teurere Treiber erfordern. Welcher d/p-Wert im jeweiligen Fall noch tolerabel ist, wird also wesentlich von den Spezifikationen der zu verwendenden Treiberelektronik bestimmt.

② In Fig. 8 ist die relative Steilheit

$$V_{90/10} = \frac{V_{90,10,T} - V_{10,10,T}}{V_{90,10,T}} \text{ bzw. } V_{50/10} = \frac{V_{50,10,T} - V_{10,10,T}}{V_{50,10,T}}$$

mit verschiedenen Temperaturen T als Parameter als Funktion des d/p-Wertes für TN-Zellen aufgetragen, welche - bis auf den d/p-Wert - der bei Fig. 1 beschriebenen Zelle entsprechen.

Während $V_{50/10}$ praktisch konstant bleibt, nimmt $V_{90/10}$ mit zunehmendem d/p-Wert zu. Die Zunahme von $V_{90/10}$

bedeutet, daß die Kennlinie im oberen Bereich ihres Anstiegs, d.h. vor Erreichen des ersten Kontrast-Maximums, flacher wird, was sehr erwünscht ist, da dies die Darstellung von mehr Graustufen im wichtigen Dunkelgraubereich (bei positiv contrast mode TN-Zellen, gekreuzte Polarisation) erlaubt.

Der Fachmann wird den d/p-Wert jeweils so aus den aufgeführten d/p-Bereichen auswählen, daß die Unterdrükkung des Effektes des inversen Kontrastes und die Verringerung der Steigung im oberen Bereich der Kennlinie möglichst groß werden, ohne daß jedoch die Vergrößerung der Schwell- und Sättigungsspannung die Verwendung der vorgesehenen Treiberelektronik unmöglich macht. Diese Optimierung kann vom Fachmann jeweils in wenigen Versuchen vorgenommen werden, ohne daß es einer erfinderischen Tätigkeit bedürfte. Ganz besonders bevorzugt ist der Bereich $0{,}25 \leq d/p \leq 0{,}5$ und insbesondere $0{,}35 < d/p \leq 0{,}5$.

TN-Zellen, welche

* einen d/p-Wert von nicht weniger als 0,1 und
* einen optischen Gangunterschied $0{,}15\ \mu m \leq d \cdot \Delta n \leq 0{,}70\ \mu m$

aufweisen, sind in der Literatur nicht beschrieben.

In JP 195,221/1982 werden TN-Zellen vorgeschlagen, deren Flüssigkristallmischung mit einer optisch aktiven Verbindung dotiert ist, so daß $0{,}15 < d/p < 0{,}35$ und insbesondere $d/p \sim 0{,}25$. Über den optischen Gangunterschied der Flüssigkristallschicht findet sich keine Aussage, und in dem einzigen Beispiel ist $d \cdot \Delta n = 1{,}3\ \mu m$. Der Zusatz der optisch aktiven Verbindung erfolgt, um Disorientierungen der Flüssigkristallschicht, die durch fehlerhafte Orientierungsschichten bewirkt werden können, zu unterdrücken. Die Verbesserung der elektrooptischen Eigenschaften einer TN-Zelle, insbesondere die Kombination einer geringen Blickwinkelabhängigkeit des Kontrastes, einer erhöhten Graustufenkapazität im Dunkelgraubereich mit einer weitgehenden Unterdrückung des Effektes des inversen Kontrastes, wird nicht diskutiert. Darüber hinaus ist die erfindungsgemäße Lehre der JP 195,221/1982 auf solche TN-Zellen beschränkt, deren Flüssigkristallmischung einen hohen Anteil von Flüssigkristallverbindungen des Typs

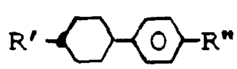

aufweist, worin R' und R" CN, Alkyl, Alkoxy, Alkanoyloxy oder Alkoxycarbonyloxy bedeuten; in dem Beispiel beträgt der Anteil von Verbindungen dieses Typs an der Flüssigkristallmischung etwa 2/3 (Flüssigkristallmischung ZLI-1565, Handelsprodukt von E. Merck, Darmstadt).

In US 4,143,947 wird ein Verfahren zur Verbesserung der Schaltzeiten von verdrillten Zellen beschrieben, wobei die Flüssigkristallmischung dotiert ist und zur Verminderung der Schaltzeiten einen d/p-Wert $0{,}25 < d/p < 1$ aufweist. Durch diese Bedingung werden sowohl TN- als auch STN-Zellen umfaßt, wobei letztere durch völlig andere elektrooptische Eigenschaften gekennzeichnet sind (höhere Steilheit der elektrooptischen Kennlinie und daher geringe Graustufenkapazität, schlechtere Blickwinkelabhängigkeit des Kontrastes, Interferenzfarben etc.). Die optische Anisotropie wird nicht näher diskutiert, und in einem Beispiel beträgt $d \cdot \Delta n = 2{,}81\ \mu m$ ($d = 12{,}5\ \mu m$, Doppelbrechung der Mischung E7 $\Delta n = 0{,}225$, E7 ist Handelsprodukt von Merck Ltd., GB).

Um die bei Anwendung der technischen Lehre der vorliegenden Erfindung erzielbaren Vorteile, nämlich

* Vergrößerung der Graustufenkapazität und
* Unterdrückung des inversen Kontrastes,

möglichst weitgehend zu realisieren, ohne dabei

* gleichzeitig eine nicht tolerierbar hohe Schwellenspannung in Kauf nehmen zu müssen,

wird der Fachmann die Flüssigkristallmischung vorzugsweise so auswählen, daß diese vor der Zugabe der Dotierkomponente eine niedrige Schwellenspannung aufweist.

Als Beispiel sind in Fig. 9 die elektrooptischen Kennlinien bei $\theta = 0°$ bzw 45° für die bei Fig. 1 beschriebenen TN-Zelle (dünn ausgezogene Linien) und für eine dieser entsprechende TN-Zelle (dick ausgezogene Linien) verglichen, wobei in der letzteren allerdings, abweichend von der in der TN-Zelle gemäß Fig. 1 benutzten Flüssigkristallmischung LC I die Mischung LC II verwendet wird, enthaltend die folgenden Verbindungen

| | |
|---|---|
| 4,0 % | 4-(trans-4-Pentylcyclohexyl)-1-benzol |

(fortgesetzt)

| | |
|---|---|
| 9,0 % | 4-[trans-4-(trans-4-ethylcyclohexyl)-cyclohexyl]-1-trifluoromethoxybenzol |
| 9,0 % | 4-[trans-4-(trans-4-propylcyclohexyl)-cyclohexyl]-1-trifluoromethoxybenzol |
| 9,0 % | 4-[trans-4-(trans-4-pentylcyclohexyl)-cyclohexyl]-1-trifluoromethoxybenzol |
| 7,0 % | 2, 6-Difluor-4- (trans-4-ethylcyclohexyl)-3',4'-difluorbiphenyl |
| 7,0 % | 2,6-Difluor-4-(trans-4-propylcyclohexyl)-3',4'-difluorbiphenyl |
| 8,0 % | 2,6-Difluor-4-(trans-4-pentylcyclohexyl)-3',4'-difluorbiphenyl |
| 16,0 % | 4-[trans-4-(trans-4-Ethylcyclohexyl)-cyclohexyl]-1-difluoromethoxybenzol |
| 14,0 % | 4-[trans-4-(trans-4-Propylcyclohexyl)-cyclohexyl]-1-difluoromethoxybenzol |
| 17,0 % | 4-[trans-4-(trans-4-Pentylcyclohexyl)-cyclohexyl]-1-difluoromethoxybenzol |

LC II ist durch Zusatz von S-811 so dotiert, so daß d/p = 0,49 beträgt (Konzentration von S-811: 0,63 %).
Die undotierte Flüssigkristallmischung LC II weist folgende Eigenschaften auf:

Klärpunkt N 85 °C I
dielektrische Anisotropie $\Delta\varepsilon$ (1 kHz, 20 °C) = 9,4
optische Anisotropie $\Delta n$ (589 nm, 20 °C) = 0,0911

Man erkennt, daß bei einer sehr hohen Dotierung nahe der oberen Grenze des zulässigen d/p-Intervalls das Minimum in der elektrooptischen Kennlinie der dotierten TN-Zelle bei $\theta$ = 45° nahezu verschwunden ist. Die Steilheit der elektrooptischen Kennlinie der dotierten TN-Zelle (d/p = 0,49) ist im oberen Bereich relativ gering, wodurch eine hohe Graustufenkapazität in diesem Bereich resultiert. Die in Fig. 9 charakterisierten TN-Zellen weisen bei beiden Blickwinkeln $\theta$ = 0 und $\theta$ = 45° in etwa die gleiche Schwellenspannung auf, was dadurch erreicht wird, daß die undotierte Ausgangsflüssigkristallmischung LC II der dotierten TN-Zelle eine deutlich niedrigere Schwellenspannung aufweist als die Flüssigkristallmischung LC I der undotierten TN-Zelle.

In umfangreichen experimentellen Untersuchungen hat sich gezeigt, daß solche erfindungsgemäßen TN-Zellen, deren Flüssigkristallmischung eine oder mehrere Verbindungen der Formel I enthält,

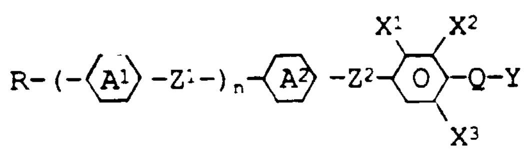

I

worin

R eine Alkylgruppe, worin auch eine oder 2 nicht benachbarte $CH_2$-Gruppen durch -O-, -CO-, -COO-, -OCO- oder -CH=CH- ersetzt sein können,

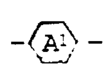

und

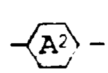

unabhängig voneinander trans-1,4-Cyclohexylen, 1,4-Phenylen, 2-Fluoro-1,4-phenylen, 3-Fluoro-1,4-phenylen, 2,3-Difluoro-1,4-phenylen oder 3,5-Difluoro-1,4-phenylen, einer von

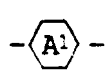

und

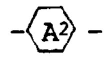

auch Pyrimidin-2,5-diyl, Pyridin-2,5-diyl oder trans-1,4-Dioxan-2,5-diyl,

$Z^1$ und $Z^2$ unabhängig voneinander auch eine Einfachbindung, $-CH_2CH_2-$, -COO-, -OCO- oder -C≡C-

$X^1$, $X^2$ und $X^3$ unabhängig voneinander H oder F,

Q $CF_2$, $OCF_2$, $C_2F_4$, $OC_2F_4$ oder eine Einfachbindung,

y H, F oder Cl, und

n 0, 1 oder 2

bedeuten,
ganz besonders bevorzugt sind.

Erfindungsgemäße TN-Zellen, deren Flüssigkristallmischung nicht weniger als 50 % und insbesondere mehr als 75 % von einer oder mehreren Verbindungen der Formel I enthält, weisen zusätzlich zu den sonstigen Vorteilen der erfindungsgemäßen TN-Zellen ein hohes HR auf und sind daher besonders für eine Aktiv-Matrix-Ansteuerung geeignet.

Die Flüssigkristallverbindungen der Formel I, die auch als SFM-Verbindungen bezeichnet werden (superfluorinated materials), sind bekannt, und ihre Herstellung erfolgt nach an sich bekannten Methoden, wie sie der Fachmann etwa Houben-Weyl, Methoden der organischen Chemie, Stuttgart, entnehmen kann.

Die Dotierkomponente kann eine oder mehrere chirale Verbindungen enthalten, wobei Dotierstoffe zugesetzt werden können und/oder auch die Verbindugnen der Flüssigkristallmischung chiral sein können.

Bei einer Verwendung mehrerer, z.B. von 2 chiralen Verbindungen, ergibt sich der Kehrwert des insgesamt eingestellten Pitchs p häufig durch eine Linearkombination der Beiträge der einzelnen Verbindungen, z.B.

$$\frac{1}{p} = HTP_1 c_1 + HTP_2 c_2$$

wobei der Index die beiden verschiedenen Verbindungen kennzeichnet.

Chirale Verbindungen, die in der als Testmischung verwendeten Flüssigkristallmischung ZLI-1132 (Handelsprodukt von E. Merck, Deutschland) einen HTP-Wert von

$$| HPT\ (20\ °C) | \geq 10\ \mu m^{-1}$$

aufweisen, sind bevorzugt.

Die Dotierkomponente enthält vorzugsweise nicht mehr als 10, insbesondere nicht mehr als 5 und ganz besonders 1-3 chirale Verbindungen.

Die Dotierkomponente wird vorzugsweise so ausgewählt, daß die erfindungsgemäße TN-Zelle weitgehend temperaturunabhängige elektrooptische Parameter und insbesondere eine weitgehend temperaturunabhängige Schwellenspannung aufweist. Hierzu ist z.B. in DE 28 27 471 eine aus 2 geeigneten Dotierstoffen bestehende Dotierkomponente vorgeschlagen worden, während die in DE 33 33 677 oder DE 35 23 185 beschriebenen Dotierstoffe bereits bei Verwendung eines einzigen Dotierstoffes zu TN-Zellen mit einer niedrigen Temperaturabhängigkeit der elektrooptischen Parameter führen.

Chirale Dotierstoffe der Formel II

$$R^1\text{-CO-O-CHR}^0\text{-CH}_2\text{-O-OC-}R^2 \qquad \text{II}$$

worin

$R^1$ und $R^2$ unabhängig voneinander jeweils eine Gruppe $-(A^3\text{-}Z^3)_m\text{-}(A^4)_o\text{-}V$ bedeuten,

worin

A³ und A⁴ jeweils unabhängig voneinander eine 1,4-Phenylen-, Pyrimidin-2,5-diyl-, 1,4-Cyclohexylen-, 1,3-Dioxan-2,5-diyl-, 1,4-Dithian-2,5-diyl oder 1,4-Bicyclo(2,2,2)-octylen-gruppe, wobei diese auch ein- oder mehrfach substituiert sein kann und durch F, Cl, Br, CN und/oder Alkylgruppen mit bis zu 12 C-Atomen, wobei in den Alkylgruppen 1 oder 2 CH2-Gruppen durch O-Atome ersetzt sein können,

$Z^3$ -CO-O-, -O-CO-, $-CH_2CH_2-$, $-OCH_2-$, $-CH_2O-$, -CH=N-, -N=CH-, -N=N-, -N(O)=N- oder eine Einfachbindung,

m und o jeweils unabhängig voneinander 0, 1 oder 2 und

V eine geradkettige oder verzweigte Alkylgruppe mit bis zu 12 C-Atomen, wobei 1 oder 2 nicht benachbarte $CH_2$-Gruppen durch O-Atome ersetzt sein können, oder falls o 1 oder 2 ist, auch F, Cl, Br oder CN

bedeuten, und

$R^0$ eine Alkylgruppe mit 1-5 C-Atomen, unsubstitutiertes oder substituiertes $(C_6-C_{18})$-Aryl oder $(C_5-C_{12})$ -Cycloalkyl ist,

sind bevorzugt. Besonders bevorzugte Verbindungen der Formel II sowie Verfahren zu ihrer Herstellung sind in DE 35 23 185 beschrieben.

Die chiralen Dotierstoffe können ein oder auch mehrere Chiralitätszentren aufweisen. Bevorzugt sind solche Dotierkomponenten, bei denen mindestens ein chiraler Dotierstoff 2 Chiralitätszentren aufweist. Ganz besonders bevorzugt sind solche chiralen Komponenten, die das Strukturelement II aufweisen,

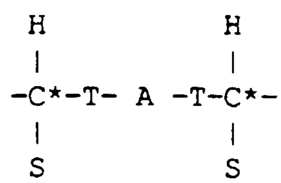

II

worin

S jeweils unabhängig voneinander eine Alkyl- oder Alkoxygruppe mit 1-5 C-Atomen, CN oder Halogen,

T jeweils unabhängig voneinander -O-, -COO-, -OOC-, $-CH_2CH_2-$ oder eine Einfachbindung, und

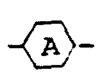 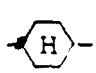, 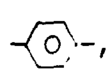, 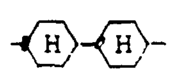, 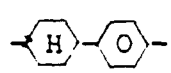 oder 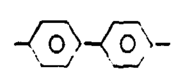

bedeuten.

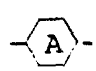

ist bevorzugt

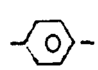, 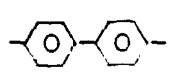 oder 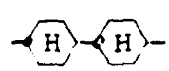,

insbesondere jedoch

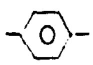 oder 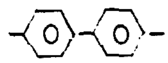.

S ist bevorzugt $CH_3$-, $CH_3$-$CH_2$, Cl oder CN und ganz besonders bevorzugt $CH_3$-, Cl oder CN.

Die erfindungsgemäßen TN-Zellen zeichnen sich durch verbesserte elektrooptische Eigenschaften und insbesondere durch eine hohe Blickwinkelunabhängigkeit des Kontrastes, durch einen verringerten inversen Kontrast und durch eine verbesserte Graustufenkapazität aus. Die erfindungsgemäßen TN-Zellen können in optischen Geräten und/oder elektronischen Geräten mit optischen Bauteilen verwendet werden. Die erfindungsgemäßen TN-Zellen können inbesondere als Displays in TV-Geräten, Videogeräten oder weiteren Geräten der Unterhaltungselektronik, als Computerbildschirm, weiter auch für die Multimediawiedergabe oder in Verkehrsleitsystemen und weiter für verschiedenste Displayanwendungen eingesetzt werden. Die erfindungsgemäßen TN-Zellen können insbesondere für Anwendungen eingesetzt werden, die präzise Graustufendarstellungen verlangen; als Bespiel sei etwa die Verwendung in optischen Computern angeführt.

## Patentansprüche

1. TN-Zelle, welche zwischen zwei mit Elektroden- und Ausrichtugnsschichten versehenen Substraten einen nematischen Flüssigkristall mit positiver dielektrischer Anisotropie und einem Twistwinkel von im wesentlichen 90° enthält, wobei das Produkt aus dem Abstand der Substratplatten d und der optischen Anisotropie $d \cdot \Delta n$ des Flüssigkristalls zwischen 0,15 und 0,70 µm beträgt, dadurch gekennzeichnet, daß der Flüsssigkristall zur Verbesserung der Graustufenkapazität eine Dotierkomponente enthält, so daß die Zelle für den ungestörten Quotienten aus dem Abstand der Substratplatten d und der Pitchlänge des Flüssigkristalls p einen Wert aufweist $0,1 \le d/p \le 0,5$.

2. TN-Zelle nach Anspruch 1, dadurch gekennzeichnet, daß die Dotierkomponente so ausgewählt ist, daß die Temperaturabhängigkeit der Schwellenspannung klein ist.

3. Verwendung der TN-Zelle nach Anspruch 1 als Display in TV-Geräten oder Videogeräten, als Computerbildschirm, für die Multimediawiedergabe, in Verkehrsleitsystemen, in optischen Computern, in optischen Geräten oder elektronischen Geräten mit optischen Bauteilen.

## Claims

1. TN cell containing, between two substrates provided with electrode and alignment layers, a nematic liquid crystal having positive dielectric anisotropy and a twist angle of essentially 90°, where the product of the separation of the substrate plates d and the optical anisotropy $d \cdot \Delta n$ of the liquid crystal is between 0.15 and 0.70 µm, characterized in that, in order to improve the grey shade capacity, the liquid crystal comprises a doping component so that the cell has a value for the undisturbed quotient of the separation of the substrate plates d and the pitch of the liquid crystal p of $0.1 \le d/p \le 0.5$.

2. TN cell according to Claim 1, characterized in that the doping component is selected so that the temperature dependence of the threshold voltage is low.

3. Use of the TN cell of Claim 1 as display in TV sets or video equipment, as computer screen, for multimedia reproduction, in traffic control systems, in optical computers, in optical equipment or electronic equipment containing optical components.

## Revendications

1. Cellule TN, laquelle contient un cristal liquide nématique avec une anisotropie diélectrique positive et un angle de torsion sensiblement de 90° entre deux substrats munis de couches d'électrodes et d'orientation des molécules, le produit se monte tant entre 0,15 et 0,70 µm de la distance des plaques de substrat d et de l'anisotropie optique $d \cdot \Delta n$ du cristal liquide, caractérisée en ce que le cristal liquide contient un composant de dopage pour améliorer la capacité de niveaux de gris, de telle sorte que la cellule présente une valeur $0,1 \le d/p \le 0,5$ pour les quotients non modifiés de la distance des plaquettes de substrats d et de la longueur de pas du cristal liquide p.

2. Cellule TN selon la revendication 1, caractérisée en ce que le composant de dopage est choisi de telle sorte que la tension de seuil dépend peu de la température.

3. Utilisation de la cellule TN selon la revendication 1, comme affichage dans des postes de télévision ou des appareils vidéo, comme écran d'ordinateur, pour la reproduction multimédia, dans des systèmes d'acheminement, dans des ordinateurs optiques, dans des appareils optiques ou des appareils électroniques contenant des composants optiques.

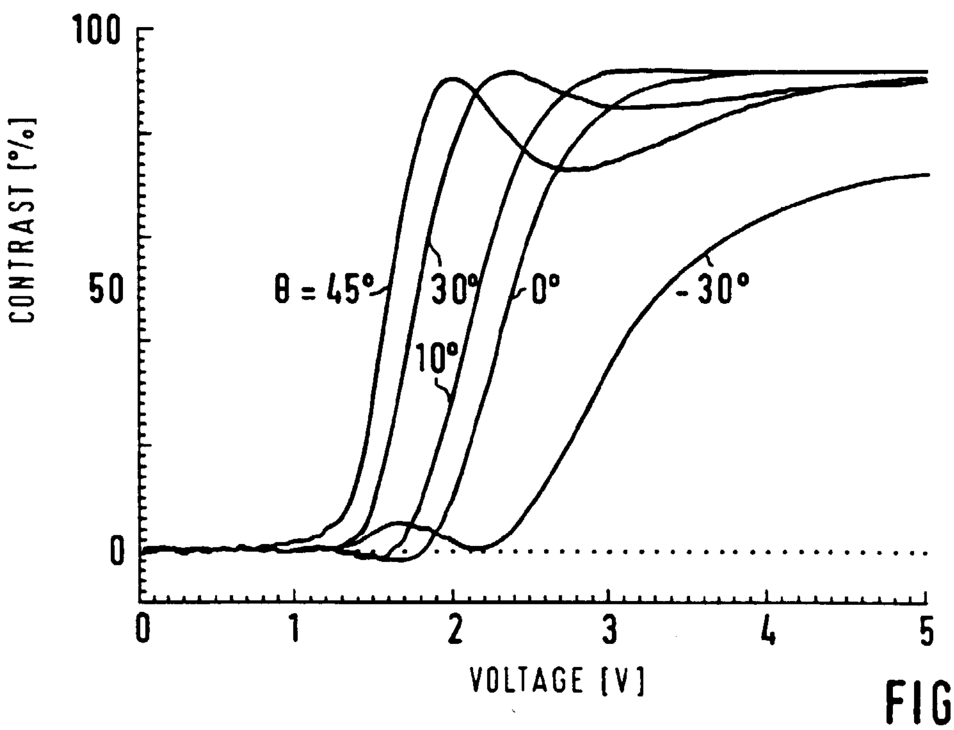
100
50
0
CONTRAST [%]
0
1
2
3
4
5
VOLTAGE [V]
θ = 45°
30°
10°
0°
-30°

FIG. 1

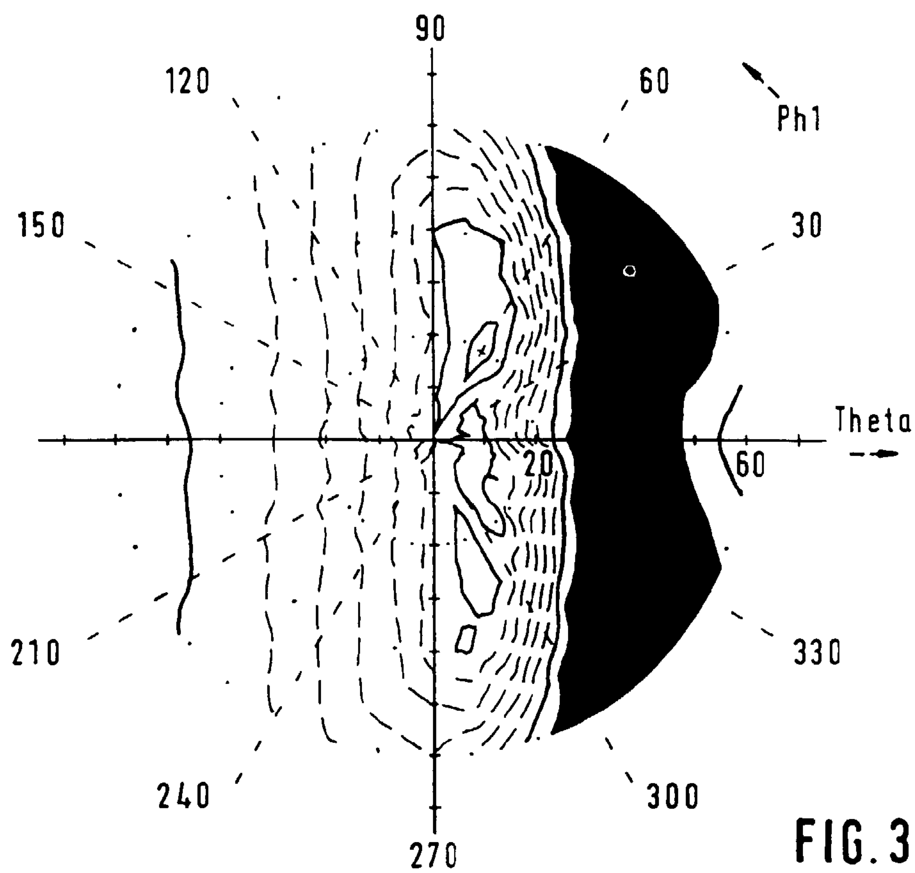
90
120
60
Ph1
150
30
Theta
20
60
210
330
240
300
270

FIG. 3

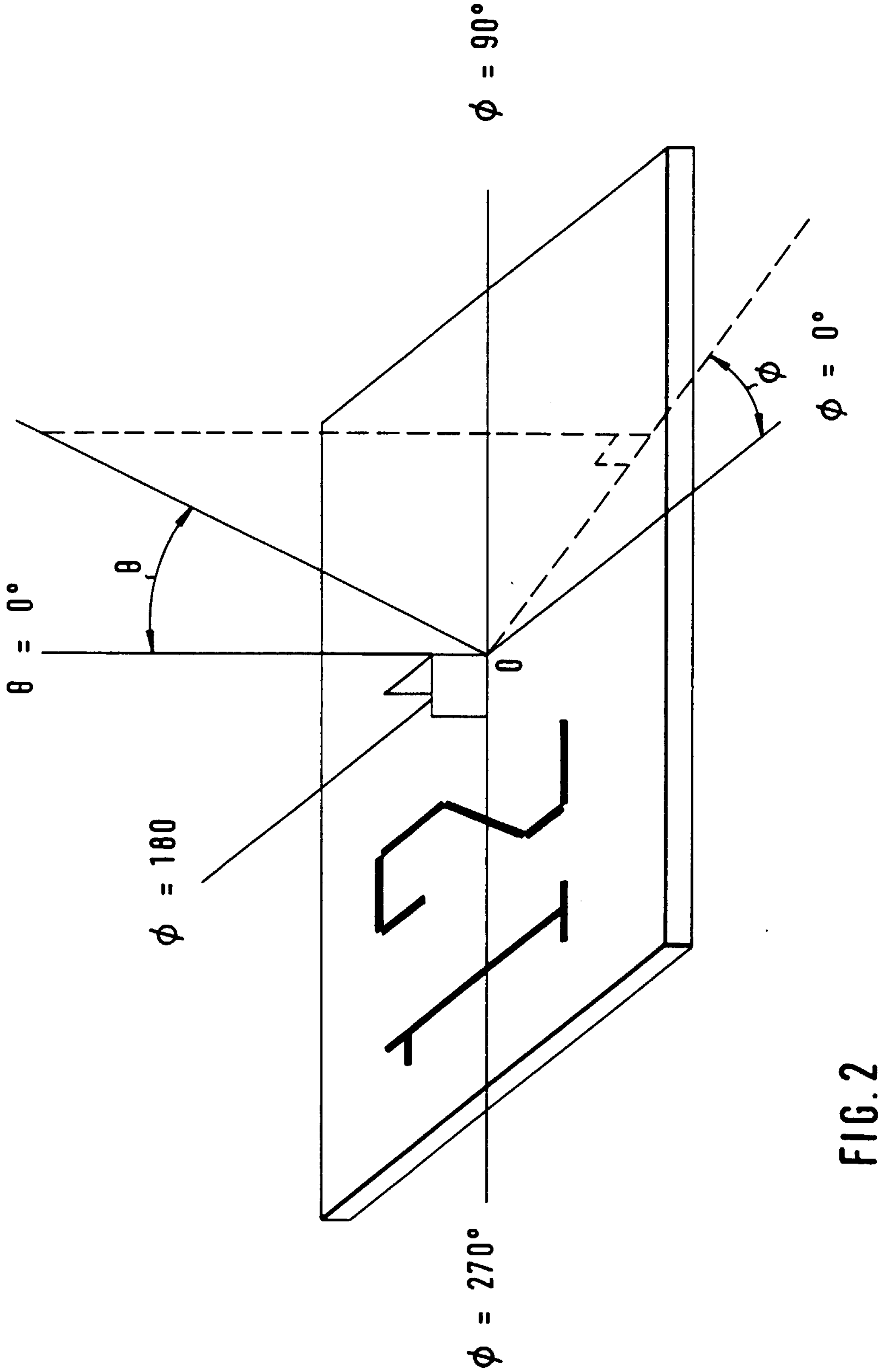


FIG. 2

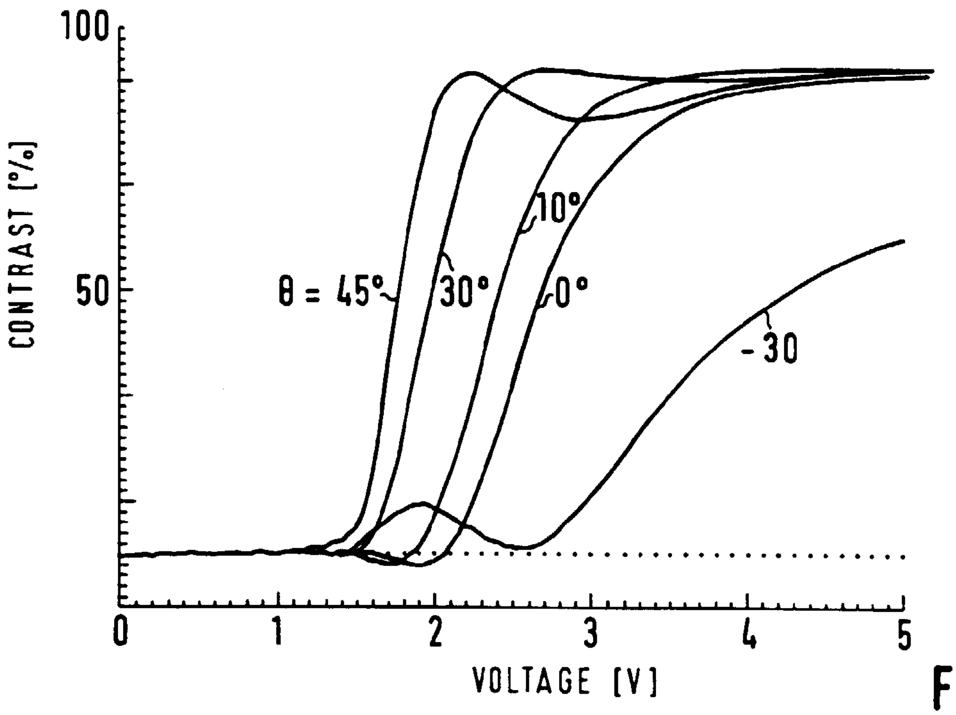
100
50
CONTRAST [%]
θ = 45°
30°
10°
0°
-30
0
1
2
3
4
5
VOLTAGE [V]

FIG. 4

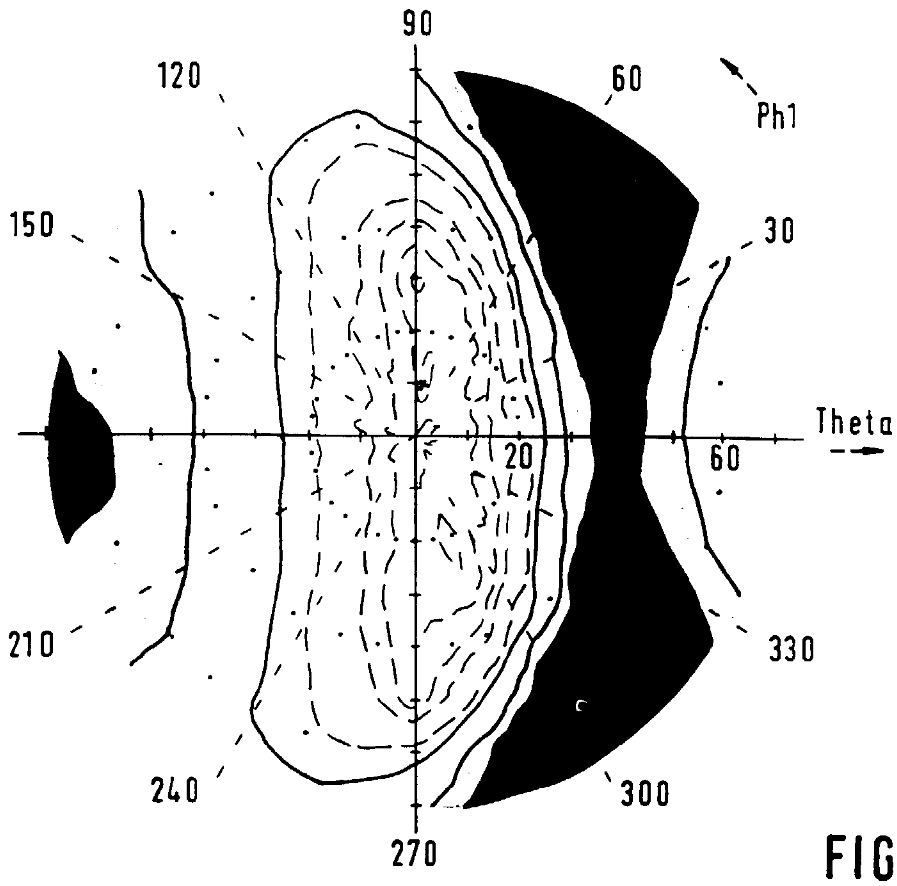
90
120
60
Ph1
150
30
Theta
20
60
210
330
240
300
270

FIG. 6

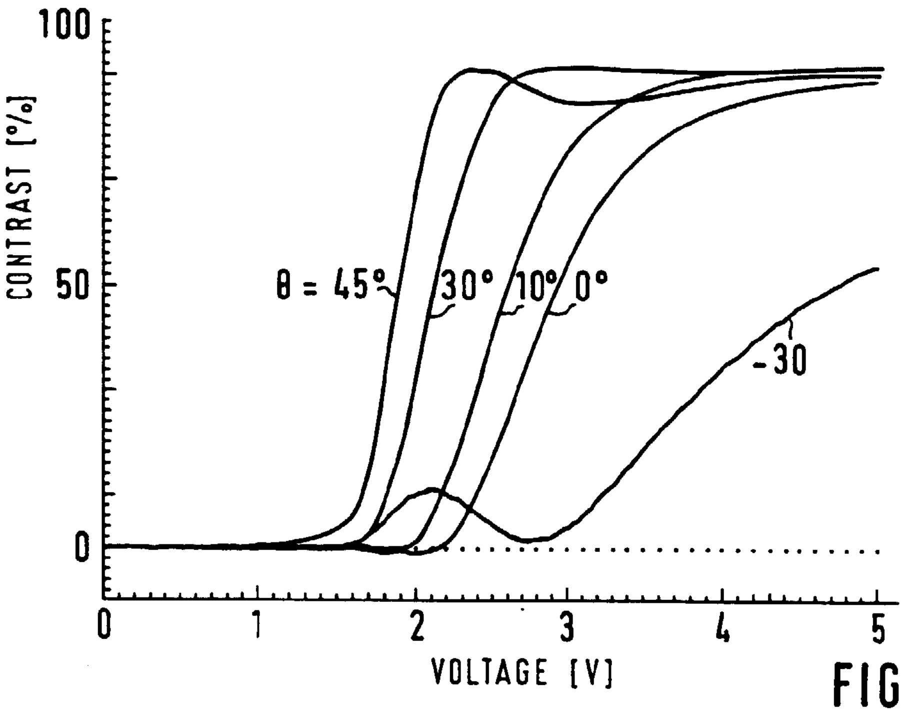
100
CONTRAST [%]
50
0
θ = 45°
30°
10°
0°
-30
0
1
2
3
4
5
VOLTAGE [V]

FIG. 5

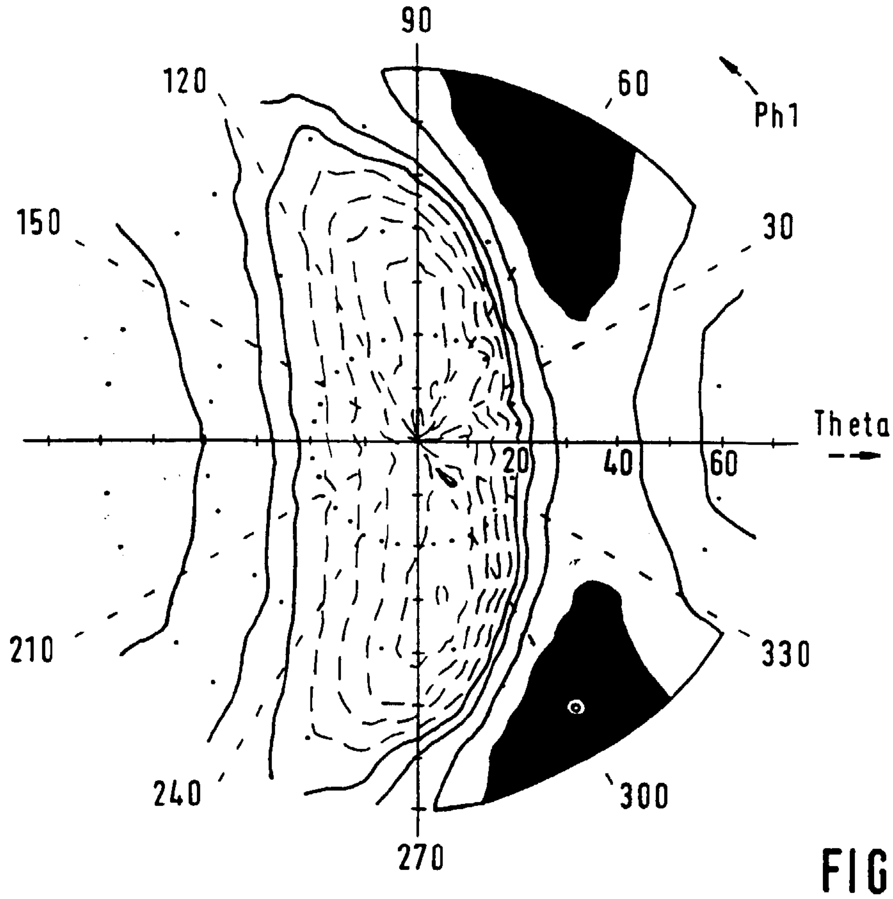
90
120
60
Ph1
150
30
Theta
20
40
60
210
330
240
300
270

FIG. 7a

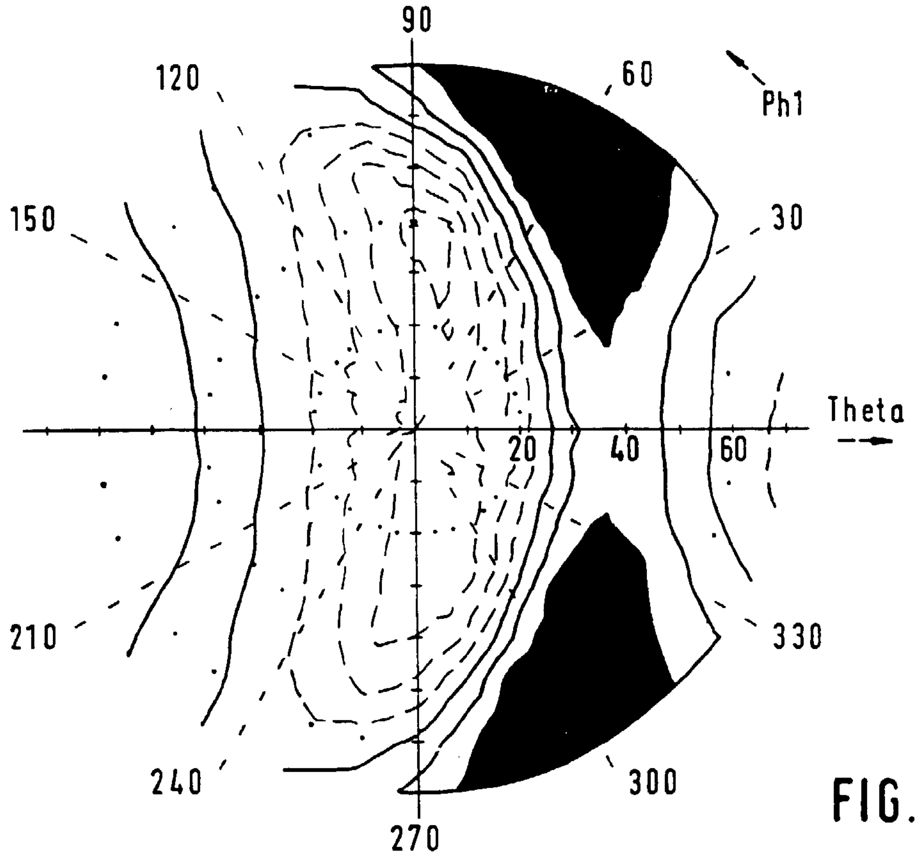
90
120
60
Ph1
150
30
Theta
20
40
60
210
330
240
300
270

FIG. 7b

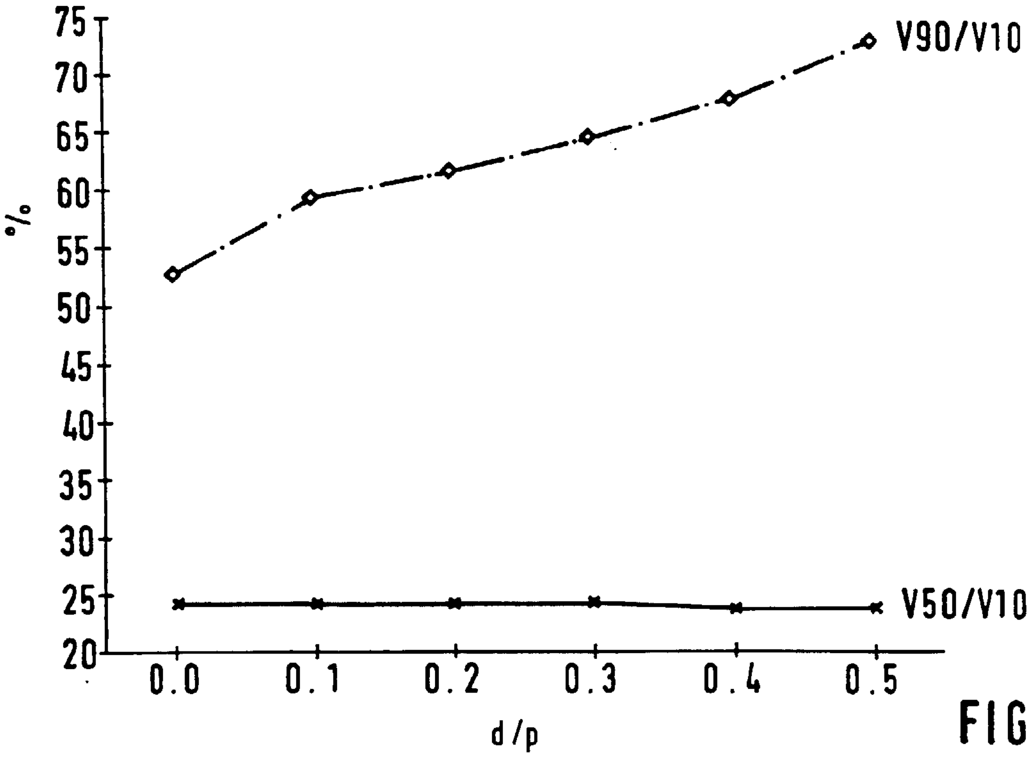
75
70
65
60
55
50
45
40
35
30
25
20
%
V90/V10
V50/V10
0.0
0.1
0.2
0.3
0.4
0.5
d/p

FIG. 8

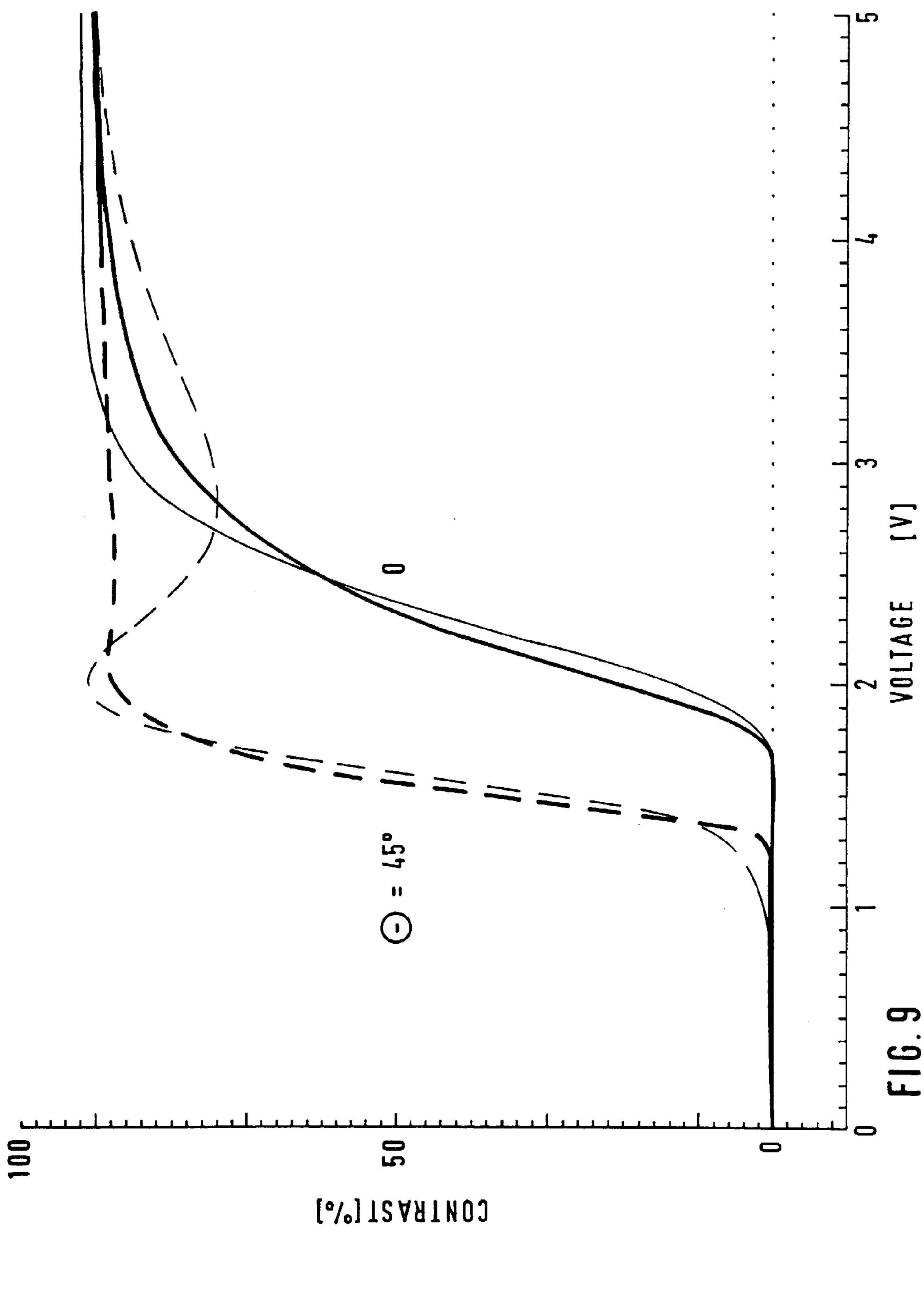


FIG. 9

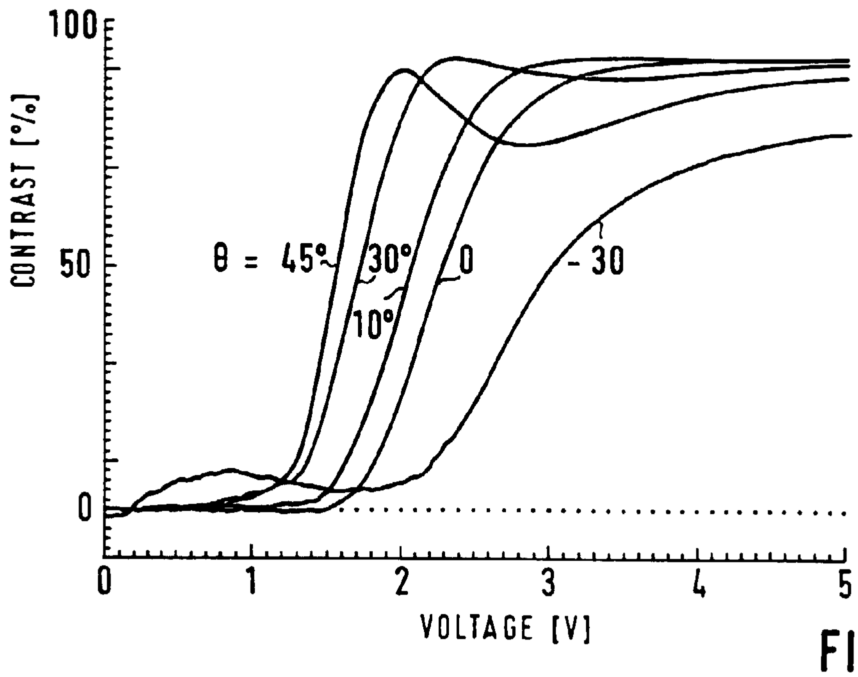


FIG. 10a

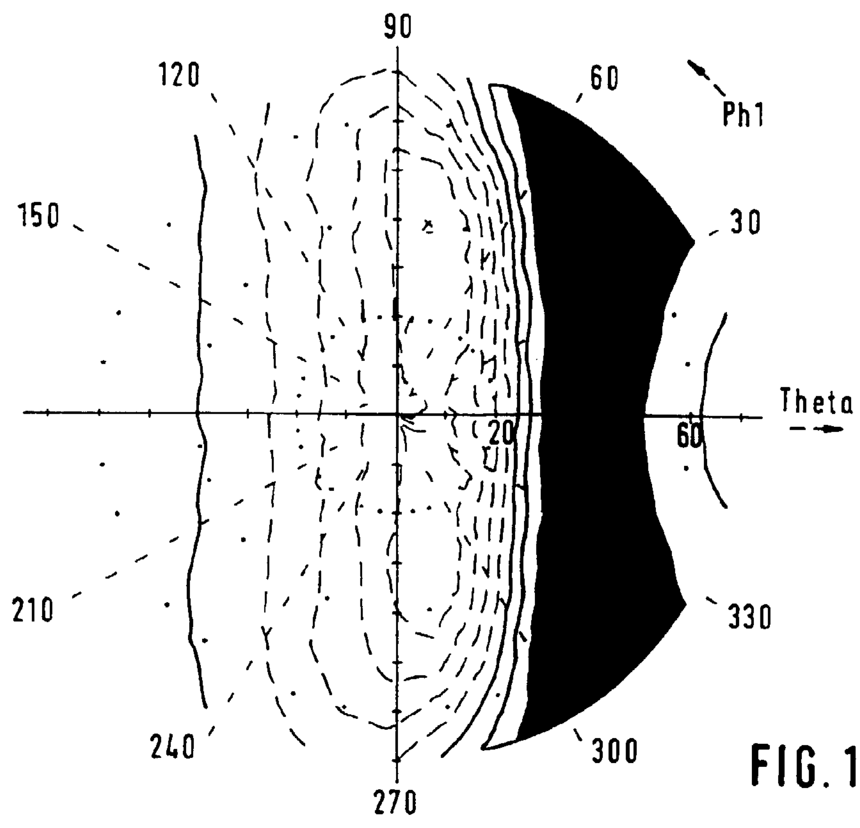


FIG. 10b

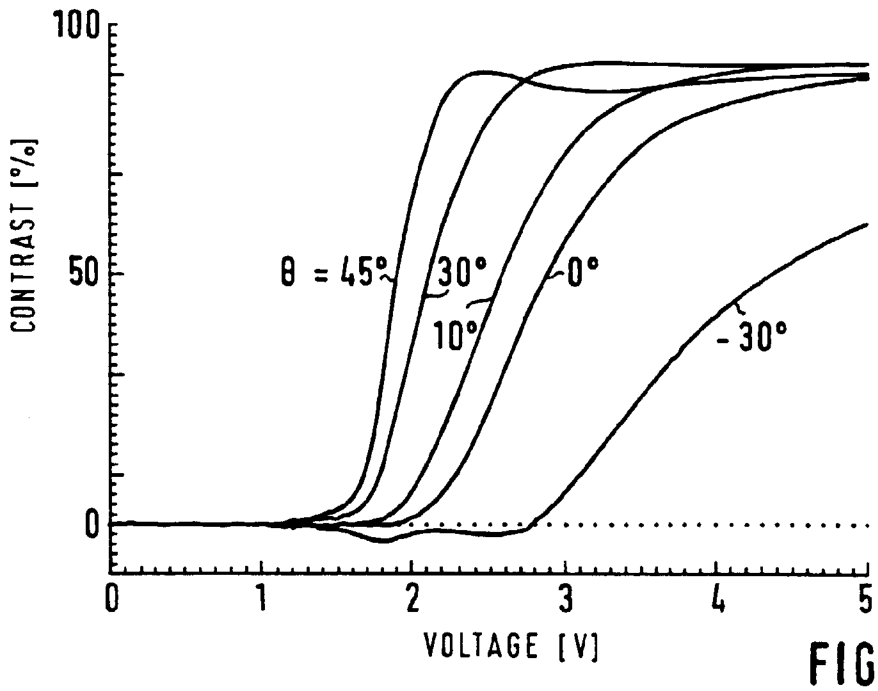


FIG. 11a

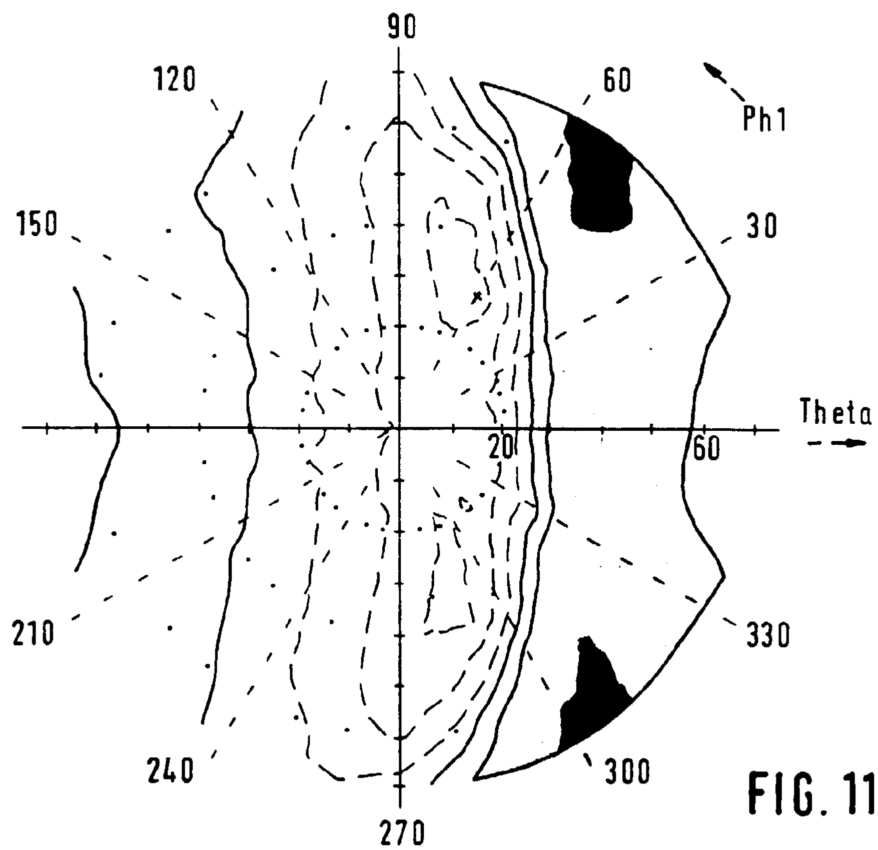


FIG. 11b